(19) Europäisches Patentamt
European Patent Office
Office européen des brevets

(11) EP 4 286 469 A1

(12) **EUROPEAN PATENT APPLICATION**
published in accordance with Art. 153(4) EPC

(43) Date of publication:
**06.12.2023 Bulletin 2023/49**

(21) Application number: **22745590.4**

(22) Date of filing: **13.01.2022**

(51) International Patent Classification (IPC):
***C08K 5/3475*** *(2006.01)* ***C08L 83/04*** *(2006.01)*
***C08L 83/05*** *(2006.01)* ***C08L 83/07*** *(2006.01)*
***C08K 3/36*** *(2006.01)*

(52) Cooperative Patent Classification (CPC):
**C08K 3/36; C08K 5/3475; C08L 83/04**

(86) International application number:
**PCT/JP2022/000939**

(87) International publication number:
**WO 2022/163365 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.01.2021 JP 2021010719**

(71) Applicant: **SHIN-ETSU CHEMICAL CO., LTD.**
**Tokyo 1000005 (JP)**

(72) Inventors:
- **HARA Tatsuei**
  **Annaka-shi, Gunma 379-0224 (JP)**
- **KATO Nobu**
  **Annaka-shi, Gunma 379-0224 (JP)**
- **UBUKATA Shigeru**
  **Annaka-shi, Gunma 379-0224 (JP)**

(74) Representative: **Mewburn Ellis LLP**
**Aurora Building**
**Counterslip**
**Bristol BS1 6BX (GB)**

# (54) OIL-BLEEDING SILICONE RUBBER COMPOSITION

(57) An oil-bleeding silicone rubber composition which comprises
100 parts by mass of (A) an organopolysiloxane containing an alkenyl group,
0.2-20 parts by mass of (B) an organohydrogenpolysiloxane containing a hydrogen atom bonded to a silicon atom,
(C) a catalyst based on a platinum-group metal, the amount of which is 0.5-500 ppm in terms of platinum-group metal amount (in mass) with respect to the total mass of the components (A) and (B),
1-10 parts by mass of (D) a specific phenyl-group-containing organopolysiloxane,
1-25 parts by mass of (E) a specific nonfunctional dimethylpolysiloxane, and
(F) a specific benzotriazole derivative, the amount of which is 2-100 mol per mol of the platinum atoms contained in the component (C).
The oil-bleeding silicone rubber composition gives cured objects having improved heat resistance, without containing any of conventional additives for improving heat resistance.

EP 4 286 469 A1

## Description

### TECHNICAL FIELD

This invention relates to an oil-bleeding silicone rubber composition which cures into a silicone rubber or cured product having improved heat resistance and a low compression set.

### BACKGROUND ART

Because of its heat resistance, weather resistance, durability and electrical properties, silicone rubber has heretofore been widely employed in a variety of fields as building materials, electric and electronic parts, automotive parts, and business machine parts. Of these, the automotive parts of silicone rubber find remarkable wide-spreading use and include oil seals, wire connector packings, rubber plugs, O-rings, diaphragms, and distributor grommets. Especially for use as grommets in connectors and distributors where ease of assembly, tight seal when mounted, water-proofness, and insulation are of particular concerns, oil-bleeding silicone rubber was found effective because molded parts thereof allow oil to bleed on their surface. In fact, oil-bleeding silicone rubber has been in widespread use.

In association with the recent size reduction and power enhancement of automotive engines, parts arranged around the engine are required to have high heat resistance. One of the means for further enhancing the heat resistance of silicone compositions is to add metal oxides such as iron oxide, titanium oxide and cerium oxide as the heat resistance improver. From these compositions, silicone rubber cured products experiencing small changes of physical properties at higher temperatures are obtainable.

When the oil-bleeding silicone rubber is used as gaskets such as O-rings and packings, a low compression set is required to prevent seal leakage. For the purpose of reducing the compression set of molded rubber resulting from heat cure, it is generally necessary to subject the molded rubber to secondary vulcanization at high temperature for a long time.

Patent Document 1 (JP-A 2016-518461) and Patent Document 2 (JP-A 2014-031408) describe silicone compositions containing metal oxides (titanium oxide or iron oxide in the former and hydrous cerium oxide or hydrous zirconium oxide in the latter). Allegedly, the silicone rubber compositions are improved in heat resistance by adding metal oxides thereto.

However, since the compositions of Patent Documents 1 and 2 contain metal oxides, cured products thereof are colored. When a different color is desired, it is difficult to tint the compositions with the desired color.

Patent Document 3 (JP-A H07-130424) discloses an oil-bleeding seal part for connector water-proofness which is obtained by adding a hydrosilylation reaction catalyst consisting of a platinum based catalyst and a non-silicone thermoplastic resin to a silicone rubber composition. Since this catalyst merely aims to reduce the molding/processing time and to acquire economic superiority, heat resistance improvers such as rare earth oxides, cerium silanolates and cerium fatty acid salts must be separately added for heat resistance enhancement.

Patent Document 4 (JP-A H06-032983) discloses oil-bleeding silicone rubber molded parts having heat resistance inherent to silicone rubber, which are obtained by adding a phthalic ester as the oil not causing electric contact faults to a silicone rubber composition. The phthalic ester merely allows the silicone rubber to maintain its own heat resistance, but does not improve the physical properties and heat resistance of the silicone rubber composition.

Patent Document 5 (JP-A 2000-118361) describes that a functional wiper blade in the form of a molded part of a silicone rubber composition containing silicone oil as a water repellent exhibits high heat resistance as compared with prior art wiper blades. However, a heat resistance test is described nowhere, and the level of heat resistance that must be met by wiper blades is below the heat resistance (e.g., 200°C or higher) desired in the present invention. The bleedout silicone oil is merely used as the water repellent.

Patent Document 6 (JP-A H06-093186) describes an oil-bleeding silicone rubber composition comprising two bleed oils, i.e., phenyl silicone oil and phenyl-containing low-molecular-weight silicone oil. It describes that the combination of two bleed oils is successful in suppressing pressure-sensitive adhesion and improving roll workability while achieving the bleeding effect, but refers nowhere to heat resistance.

Patent Document 7 (JP-A H02-242854) describes that an addition-curable silicone rubber composition having a triazole compound added thereto is reduced in compression set without a need for secondary vulcanization. However, heat resistance is discussed nowhere.

### PRIOR ART DOCUMENTS

### PATENT DOCUMENTS

Patent Document 1: JP-A 2016-518461
Patent Document 2: JP-A 2014-031408
Patent Document 3: JP-A H07-130424
Patent Document 4: JP-A H06-032983
Patent Document 5: JP-A 2000-118361
Patent Document 6: JP-A H06-093186
Patent Document 7: JP-A H02-242854

## SUMMARY OF INVENTION

## TECHNICAL PROBLEM

An object of the invention, which has been made under the above-mentioned circumstances, is to provide an oil-bleeding silicone rubber composition capable of improving the heat resistance of a cured product and reducing the compression set without adding conventional additives for improving heat resistance such as metal oxides and antioxidants.

## SOLUTION TO PROBLEM

Making extensive investigations to attain the above object, the inventors have found that when specific components: (D) a phenyl-containing organopolysiloxane, (E) a nonfunctional dimethylpolysiloxane, and (F) a benzotriazole derivative are added to an addition-curable silicone rubber composition essentially comprising components (A) to (C) to be described below, a cured product of the resulting composition is imparted with oil-bleeding properties, improved in heat resistance, and reduced in compression set.

Accordingly, the invention provides an oil-bleeding silicone rubber composition as defined below.

1. An oil-bleeding silicone rubber composition comprising

(A) 100 parts by weight of an organopolysiloxane containing at least two silicon-bonded alkenyl groups per molecule,
(B) 0.2 to 20 parts by weight of an organohydrogenpolysiloxane containing at least two silicon-bonded hydrogen atoms per molecule,
(C) a platinum group metal based catalyst in an amount to give 0.5 to 500 ppm by weight of platinum group metal based on the total weight of components (A) and (B),
(D) 1 to 10 parts by weight of a phenyl-containing organopolysiloxane having the formula (1):

[Chem. 1]

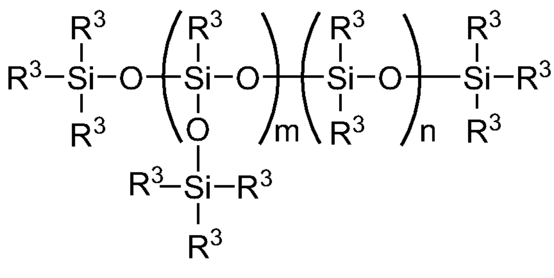

(1)

wherein $R^3$ which may be the same or different is a $C_1$-$C_{10}$ substituted or unsubstituted monovalent hydrocarbon group free of aliphatic unsaturation, at least one $R^3$ is phenyl, m is a positive number of 0 to 3, n is a positive number of 3 to 50, and m+n is a positive number of 3 to 50,
(E) 1 to 25 parts by weight of a nonfunctional dimethylpolysiloxane having the formula (2):

[Chem. 2]

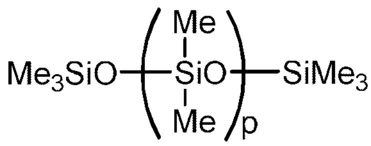

(2)

wherein Me stands for methyl and p is an integer of 2 to 600, and
(F) a benzotriazole derivative having the general formula (3):

[Chem. 3]

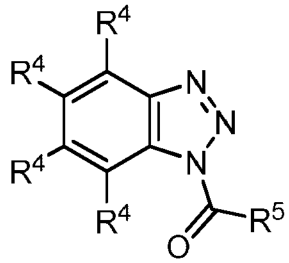

(3)

wherein $R^4$ is hydrogen or a $C_1$-$C_6$ monovalent hydrocarbon group, and $R^5$ is a $C_1$-$C_{15}$ monovalent hydrocarbon group or a group having the formula (4):

[Chem. 4]

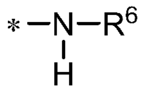

(4)

wherein $R^6$ is $-(CH_2)_L-Si(OR^7)_3$, $R^7$ is a $C_1$-$C_4$ alkyl group or group $SiR^8_3$, $R^8$ is a $C_1$-$C_4$ alkyl group, L is an integer of 1 to 6, and * designates a point of attachment, in an amount of 2 to 100 moles per mole of the platinum group metal in component (C).

2. The oil-bleeding silicone rubber composition of 1, further comprising (G) 5 to 100 parts by weight per 100 parts by weight of component (A) of a reinforcing silica powder.
3. The oil-bleeding silicone rubber composition of 1 or 2 wherein a cured silicone rubber obtained by curing the silicone rubber composition has a compression set of up to 40% after compressed at compression 25% and 150°C for 70 hours according to JIS K 6262: 2013.
4. The oil-bleeding silicone rubber composition of any one of 1 to 3 wherein a cured silicone rubber obtained by curing the silicone rubber composition has an elongation at break as measured according to JIS K 6249: 2003, and a percent reduction of the elongation at break after heating at 225°C for 72 hours from the initial elongation at break is 30% or less.
5. The oil-bleeding silicone rubber composition of any one of 1 to 4 wherein in formula (1), m is a positive number of 1 to 3, n is a positive number of 3 to 49, and m+n is a positive number of 4 to 50.

## ADVANTAGEOUS EFFECTS OF INVENTION

According to the invention, the heat resistance of an oil-bleeding silicone rubber cured product can be improved by adding a component for imparting oil bleeding properties, without a need for conventional additives for improving heat resistance such as metal oxides. The compression set can be reduced by adding a triazole derivative. Since the inventive silicone rubber composition eliminates a need for conventional additives for improving heat resistance such

as metal oxides, a cured product thereof looks colorless to milky white and can be readily colored as desired by adding a colorant such as a pigment.

## DESCRIPTION OF EMBODIMENTS

Now the oil-bleeding silicone rubber composition of the invention is described as well as a method for improving the heat resistance of an oil-bleeding silicone rubber cured product according to one embodiment of the invention. It is noted that the numerical range of "A to B" is inclusive of the endpoints, that is, all values from A to B.

[Oil-bleeding silicone rubber composition]

The oil-bleeding silicone rubber composition of the invention contains components (A) to (F) defined below and preferably cures into a cured product which has an elongation at break as measured according to JIS K 6249: 2003, a percent reduction of the elongation at break after heating at 225°C for 72 hours from the initial elongation at break being 30% or less, preferably 25% or less, and a compression set of up to 40% as measured under conditions: compression 25%, 150°C and 70 hours according to JIS K 6262: 2013.

[(A) Alkenyl-containing organopolysiloxane]

Component (A), which is a main component (i.e., base polymer) of the composition, is an organopolysiloxane containing at least two silicon-bonded alkenyl groups per molecule. Specifically, the organopolysiloxane has the average compositional formula (5).

$$R^1_aSiO_{(4-a)/2} \qquad (5)$$

Herein $R^1$ which may be the same or different is a substituted or unsubstituted monovalent hydrocarbon group of 1 to 10 carbon atoms, and preferably 1 to 8 carbon atoms, "a" is a positive number of 1.5 to 2.8, preferably 1.8 to 2.5, and more preferably 1.95 to 2.05.

Examples of the $C_1$-$C_{10}$ substituted or unsubstituted monovalent hydrocarbon group represented by $R^1$ include alkyl groups such as methyl, ethyl, propyl, isopropyl, butyl, isobutyl, tert-butyl, pentyl, neopentyl, hexyl, cyclohexyl, octyl, nonyl, and decyl; aryl groups such as phenyl, tolyl, xylyl, and naphthyl; aralkyl groups such as benzyl, phenylethyl, and phenylpropyl; alkenyl groups such as vinyl, allyl, propenyl, isopropenyl, butenyl, hexenyl, cyclohexenyl, and octenyl; and substituted forms of the foregoing groups in which some or all hydrogen atoms are substituted by halogen atoms (e.g., fluorine, bromine and chlorine), cyano or the like, such as chloromethyl, chloropropyl, bromoethyl, trifluoropropyl, and cyanoethyl. It is preferred that at least 90 mol% of groups $R^1$ be methyl, and especially all groups $R^1$ exclusive of alkenyl groups be methyl.

Of groups $R^1$, at least two groups must be alkenyl groups, preferably of 2 to 8 carbon atoms, more preferably of 2 to 6 carbon atoms, and most preferably vinyl.

In the organopolysiloxane, the content of alkenyl groups is preferably $10\times10^{-6}$ mol/g to $5.0\times10^{-3}$ mol/g, more preferably $1.0\times10^{-5}$ mol/g to $2.0\times10^{-3}$ mol/g. As long as the alkenyl content is in the range of $1.0\times10^{-6}$ to $5.0\times10^{-3}$ mol/g, a rubbery material is obtainable. The alkenyl group may be bonded to the silicon atom at the end of the molecular chain or a silicon atom midway the molecular chain or both.

The organopolysiloxane basically has a straight chain structure blocked with a triorganosiloxy group at either end of the molecular chain and having a backbone composed of repeating diorganosiloxane units while it may partially have a branched or cyclic structure.

Examples of the organopolysiloxane having formula (5) include both end dimethylvinylsiloxy-blocked dimethylpolysiloxane, both end dimethylvinylsiloxy-blocked dimethylsiloxane/methylvinylsiloxane copolymers, both end dimethylvinylsiloxy-blocked dimethylsiloxane/diphenylsiloxane copolymers, both end dimethylvinylsiloxy-blocked dimethylsiloxane/methylvinylsiloxane/diphenylsiloxane copolymers, both end dimethylvinylsiloxy-blocked methyltrifluoropropylpolysiloxane, both end dimethylvinylsiloxy-blocked dimethylsiloxane/methyltrifluoropropylsiloxane copolymers, both end dimethylvinylsiloxy-blocked dimethylsiloxane/methyltrifluoropropylsiloxane/methylvinylsiloxane copolymers, both end trimethylsiloxy-blocked dimethylsiloxane/vinylmethylsiloxane copolymers, both end trimethylsiloxy-blocked dimethylsiloxane/vinylmethylsiloxane/diphenylsiloxane copolymers, both end trimethylsiloxy-blocked vinylmethylsiloxane/methyltrifluoropropylsiloxane copolymers, trimethylsiloxy and dimethylvinylsiloxy end-blocked dimethylpolysiloxane, trimethylsiloxy and dimethylvinylsiloxy end-blocked dimethylsiloxane/methylvinylsiloxane copolymers, trimethylsiloxy and dimethylvinylsiloxy end-blocked dimethylsiloxane/diphenylsiloxane copolymers, trimethylsiloxy and dimethylvinylsiloxy end-blocked dimethylsiloxane/diphenylsiloxane/methylvinylsiloxane copolymers, trimethylsiloxy and dimethylvinylsiloxy end-blocked methyltrifluoropropylpolysiloxane, trimethylsiloxy and dimethylvinylsiloxy end-blocked dimethylsiloxane/methyltrifluoropropylsiloxane copolymers, trimethylsiloxy and dimethylvinylsiloxy end-blocked dimethylsiloxane/methyltrifluoropropylsiloxane/methylvinylsiloxane copolymers, both end methyldivinylsiloxy-blocked dimethylpolysiloxane, both end methyldivinylsiloxy-blocked dimethylsiloxane/methylvinylsiloxane copolymers, both end methyldivinylsiloxy-blocked dimethylsiloxane/diphenylsiloxane copolymers, both end methyldivinylsiloxy-blocked dimethylsiloxane/methylvinylsiloxane/diphenylsiloxane copolymers, both end methyldivinylsiloxy-blocked methyltrifluoropropylsiloxane, both end methyldivinylsiloxy-blocked dimethylsiloxane/methyltrifluoropropylsiloxane copolymers, both end methyldivinylsiloxy-blocked dimethylsiloxane/methyltrifluoropropylsiloxane/methylvinylsiloxane copolymers, both end trivinylsiloxy-blocked dimethylpolysiloxane, both end trivinylsiloxy-blocked dimethylsiloxane/methylvinylsiloxane copolymers, both end trivinylsiloxy-blocked dimethylsiloxane/diphenylsiloxane copolymers, both end trivinylsiloxy-blocked dimethylsiloxane/methylvinylsiloxane/diphenylsiloxane copolymers, both end trivinylsiloxy-blocked methyltrifluoropropylpolysiloxane, both end trivinylsiloxy-blocked dimethylsiloxane/methyltrifluoropropylsiloxane copolymers, and both end trivinylsiloxy-blocked dimethylsiloxane/methyltrifluoropropylsiloxane/methylvinylsiloxane copolymers.

With respect to molecular weight or degree of polymerization, the organopolysiloxane typically has an average degree of polymerization (i.e., number average degree of polymerization Mn, the same applies hereinafter) of up to 1,500, preferably 100 to 1,500, more preferably 150 to 1,000. As long as the average degree of polymerization is in the range of 100 to 1,500, a rubbery material is obtainable which is effectively moldable. The average degree of polymerization may be measured typically by gel permeation chromatography (GPC) versus polystyrene standards using toluene as developing solvent (the same applies hereinafter).

Although the viscosity of the organopolysiloxane (A) is not particularly limited, it is preferred from the aspects of ease of handling or working of the composition and the strength of a cured product that the organopolysiloxane have a viscosity at 25°C of 200 to 150,000 mPa·s, more preferably 400 to 100,000 mPa·s. Notably, the viscosity is measured by a rotational viscometer while the type and rotation speed of a rotor may be selected as appropriate depending on a particular viscosity (the same applies hereinafter).

Two or more organopolysiloxanes which are different in molecular structure or degree of polymerization may be used as component (A) as long as the organopolysiloxane contains alkenyl groups bonded to silicon atoms at both ends of the molecular chain.

[(B) Organohydrogenpolysiloxane]

Component (B) is an organohydrogenpolysiloxane having at least 2, preferably at least 3 silicon-bonded hydrogen atoms (or SiH groups) per molecule. Component (B) serves as a curing agent or crosslinker for curing the composition through the mechanism that hydrosilylation addition reaction takes place between SiH groups in its molecule and silicon-bonded alkenyl groups in component (A) to form crosslinks.

Preferred as component (B) is an organohydrogenpolysiloxane having at least 2, preferably at least 3, more preferably 3 to 100, and most preferably 4 to 50 silicon-bonded hydrogen atoms (or SiH groups) in a molecule, represented by the average compositional formula (6).

$$R^2_bH_cSiO_{(4-b-c)/2} \qquad (6)$$

Herein $R^2$ which may be the same or different is a substituted or unsubstituted monovalent hydrocarbon group of 1 to 10 carbon atoms, and preferably 1 to 8 carbon atoms, "b" is a positive number of 0.7 to 2.1, "c" is a positive number of 0.001 to 0.1, and b+c is a positive number in the range of 0.8 to 3.0.

Examples of the monovalent hydrocarbon group represented by $R^2$ are as exemplified above for $R^1$, with hydrocarbon groups free of aliphatic unsaturation being preferred.

The subscript b is a positive number of 0.7 to 2.1, preferably 0.8 to 2.0, c is a positive number of 0.001 to 1.0, preferably 0.01 to 1.0, and b+c is a positive number in the range of 0.8 to 3.0, preferably 1.0 to 2.5. The molecular structure of the organohydrogenpolysiloxane may be linear, cyclic, branched or three-dimensional network.

In the organohydrogenpolysiloxane, the content of SiH groups is preferably 0.0005 mol/g to 0.020 mol/g, more preferably 0.001 mol/g to 0.017 mol/g. A SiH content of less than 0.0005 mol/g may lead to insufficient crosslinking whereas an organohydrogenpolysiloxane with a SiH content in excess of 0.020 mol/g may be unstable.

More preferred is an organohydrogenpolysiloxane in which the number of silicon atoms per molecule (i.e., degree of polymerization) is about 2 to about 300, even more preferably about 3 to about 150, most preferably about 4 to about 100 and which is liquid at room temperature (25°C). The silicon-bonded hydrogen atom may be present at the end of the molecular chain or a position midway the molecular chain or both.

Examples of the organohydrogenpolysiloxane as component (B) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, methylhydrogensiloxane/dimethylsiloxane cyclic copolymers, both end trimethylsiloxy-blocked methylhydrogenpolysiloxane, both end trimethylsiloxy-blocked dimethylsiloxane/methylhydrogensiloxane

copolymers, both end dimethylhydrogensiloxy-blocked dimethylpolysiloxane, both end dimethylhydrogensiloxy-blocked dimethylsiloxane/methylhydrogensiloxane copolymers, both end trimethylsiloxy-blocked methylhydrogensiloxane/diphenylsiloxane copolymers, both end trimethylsiloxy-blocked methylhydrogensiloxane/diphenylsiloxane/dimethylsiloxane copolymers, both end trimethylsiloxy-blocked methylhydrogensiloxane/methylphenylsiloxane/dimethylsiloxane copolymers, both end dimethylhydrogensiloxy-blocked methylhydrogensiloxane/dimethylsiloxane/diphenylsiloxane copolymers, both end dimethylhydrogensiloxy-blocked methylhydrogensiloxane/dimethylsiloxane/methylphenylsiloxane copolymers, copolymers consisting of $(CH_3)_2HSiO_{1/2}$ units, $(CH_3)_3SiO_{1/2}$ units and $SiO_{4/2}$ units, copolymers consisting of $(CH_3)_2HSiO_{1/2}$ units and $SiO_{4/2}$ units, copolymers consisting of $(CH_3)_2HSiO_{1/2}$ units, $SiO_{4/2}$ units and $(C_6H_5)SiO_{3/2}$ units, and other forms of the foregoing in which some or all methyl groups are substituted by other alkyl groups or phenyl groups.

The organohydrogenpolysiloxane (B) may also be a polyvalent aromatic ring-containing organohydrogenpolysiloxane which corresponds to the above-exemplified compound or similar compound, but has a di- to tetravalent aromatic ring-containing hydrocarbon skeleton (e.g., phenylene skeleton, bisphenylene skeleton, bis(phenylene)ether skeleton, bis(phenylene)methane skeleton, 2,2-bis(phenylene)propane skeleton, and 2,2-bis(phenylene)hexafluoropropane skeleton) in some of siloxane skeletons (-Si-O-Si-) (typically, at some of the positions of oxygen atoms in siloxane bonds) to constitute its molecule.

The organohydrogenpolysiloxane as component (B) is added in an amount of 0.2 to 20 parts, preferably 0.3 to 10 parts by weight per 100 parts by weight of component (A). Component (B) is preferably added in such an amount that the molar ratio of silicon-bonded hydrogens (or SiH) in organohydrogenpolysiloxane (B) to total silicon-bonded alkenyl groups in components (A) and (B), especially component (A), referred to as "SiH/alkenyl ratio", may be from 0.8/1 to 10/1, more preferably from 1.0/1 to 5/1. If the SiH/alkenyl ratio is less than 0.8, cure or crosslinking density may be insufficient, resulting in a sticky rubber. If the SiH/alkenyl ratio exceeds 10, there is a risk that a molded silicone rubber may contain bubbles or its mold release be difficult.

[(C) Platinum group metal base catalyst]

Component (C) is a platinum group metal base catalyst, examples of which include platinum black, platinic chloride, chloroplatinic acid, the reaction product of chloroplatinic acid with monohydric alcohol, chloroplatinic acid-olefin complexes, and platinum bisacetoacetate. The platinum group metal base catalyst may be used alone or in admixture. The platinum catalyst may be used in a catalytic amount, which is typically 0.5 to 500 ppm by weight, specifically 1 to 200 ppm by weight of platinum group metal based on the total weight of components (A) and (B).

[(D) Phenyl-containing organopolysiloxane]

Component (D) is a phenyl-containing organopolysiloxane, which is added to the silicone rubber composition containing components (A) to (C) along with a nonfunctional dimethylpolysiloxane as component (E) for thereby imparting oil-bleeding properties to a cured product and improving heat resistance. The phenyl-containing organopolysiloxane has the general formula (1).

[Chem. 5]

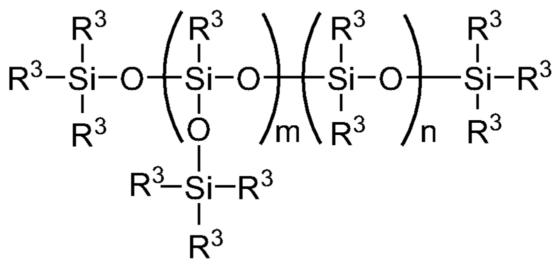
(1)

Herein $R^3$ which may be the same or different is a $C_1$-$C_{10}$ substituted or unsubstituted monovalent hydrocarbon group free of aliphatic unsaturation, at least one being phenyl, m is a positive number of 0 to 3, n is a positive number of 3 to 50, and m+n is a positive number of 3 to 50.

In formula (1), $R^3$ is each independently a substituted or unsubstituted monovalent hydrocarbon group of 1 to 10 carbon atoms, preferably 1 to 8 carbon atoms, more preferably 1 to 6 carbon atoms, even more preferably 1 to 3

carbon atoms (except the case where $R^3$ is phenyl), at least one $R^3$ being phenyl. Component (D) is distinguished from component (A) in that $R^3$ is free of an aliphatic unsaturated bond, especially alkenyl group. It is noted that the order of arrangement of siloxane units is not limited to the following (the same holds true, hereinafter).

Examples of the aliphatic unsaturation-free monovalent hydrocarbon group include alkyl groups such as methyl, ethyl, propyl, isopropyl, butyl, isobutyl, tert-butyl, pentyl, neopentyl, hexyl, cyclohexyl, octyl, nonyl and decyl; cycloalkyl groups, aryl groups such as phenyl and tolyl, aralkyl groups such as benzyl, and substituted forms of the foregoing in which some or all hydrogen is substituted by halogen. Of these, methyl and phenyl are preferred. At least one of $R^3$ in the formula is phenyl. It is preferred in the diorganosiloxane unit that two $R^3$ be phenyl or that one $R^3$ be phenyl and another $R^3$ be methyl. Further, the content of phenyl is preferably at least 3 mol%, more preferably 10 to 50 mol%, even more preferably 15 to 40 mol% of all $R^3$.

In formula (1), m and n are positive numbers in the range: $0 \leq m \leq 3$, preferably $1 \leq m \leq 3$, and $3 \leq n \leq 50$, preferably $3 \leq n \leq 49$, more preferably $3 \leq n \leq 30$, and $3 \leq m+n \leq 50$, preferably $4 \leq m+n \leq 50$, more preferably $4 \leq m+n \leq 40$, even more preferably $4 \leq m+n \leq 31$, most preferably $4 \leq m+n \leq 30$. If m+n is less than 3 (e.g., in case of m=0 and n<3), component (D) dissolves in the base polymer as component (A), failing to impart bleeding. If m+n is more than 50, tangling of the base polymer as component (A) with component (D) becomes predominant, leading to a decline of bleeding. Insofar as m+n is in the range, the base polymer as component (A) is kept incompatible with component (D) in a good balance, so that oil bleeding (degree or ease of seepage of oil) is improved by their repulsion. It is noted that m may be 0, but is preferably 1 or more, which means that the structure of formula (1) has a branched structure capable of altering the oil bleeding of a cured product. Specifically, the amount and duration of oil seeping out of the molded part or cured product at the initial stage of molding can be controlled. Also, when m is 1 or more, the heat resistance of a cured product can be further improved.

The amount of component (D) blended is 1 to 10 parts by weight, preferably 3 to 8 parts by weight per 100 parts by weight of component (A). If the amount is below the lower limit, no sufficient oil bleeding manifests. If the amount is beyond the upper limit, there is a risk that the resulting cured product is degraded in physical properties and heat resistance and mold staining occurs during molding.

Examples of the phenyl-containing organopolysiloxane (silicone oil) having formula (1) include compounds having the formulae (1-1) and (1-2).

[Chem. 6]

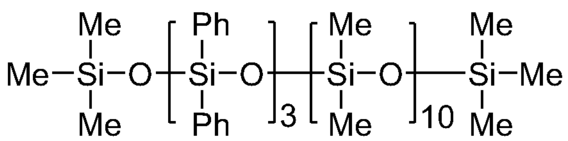

(1-1)

(phenyl group 19 mol%)

[Chem. 7]

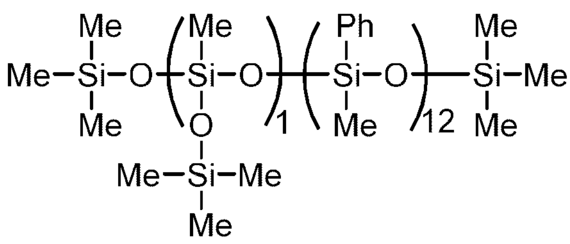

(1-2)

(phenyl group 35 mol%)

Herein Me stands for methyl and Ph for phenyl.

[(E) Nonfunctional dimethylpolysiloxane]

Component (E) is a nonfunctional dimethylpolysiloxane having the general formula (2). In connection with the inventive composition and the heat resistance improving method, when component (E) is added to the silicone rubber composition containing components (A) to (C) along with component (D), component (E) serves to impart oil bleeding to a cured product of the composition and improve the heat resistance thereof.

[Chem. 8]

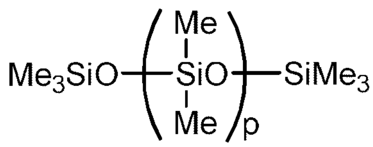

(2)

Herein Me stands for methyl and p is an integer of 2 to 600.

In formula (2), p indicative of the average degree of polymerization is an integer of 2 to 600, preferably 10 to 550. If p is less than 2, the compound does not function as an active component because it is liable to volatilize and escape out of the system. If p exceeds 600, the silicone rubber cured product has a sticky surface even when the compound is added in small amounts, so that a greater load is required to remove the molded product from a metal plate.

The amount of component (E) blended is 1 to 25 parts by weight, preferably 1 to 23 parts by weight, more preferably 2 to 21 parts by weight per 100 parts by weight of component (A). If the amount is less than 1 part by weight, not only bleeding is aggravated, but also the heat resistance-improving effect is insufficient. If the amount exceeds 25 parts by weight, the cured product is substantially degraded in rubber properties and heat resistance.

The total amount of components (D) and (E) blended is preferably 2 to 35 parts by weight, more preferably 2 to 30 parts by weight, even more preferably 3 to 25 parts by weight, most preferably 5 to 25 parts by weight per 100 parts by weight of component (A). If the amount exceeds 35 parts by weight, there is a risk that the cured product is substantially degraded in rubber properties and heat resistance and incurs mold staining. The weight proportion of the amount of component (D) to the total amount of components (D) and (E), i.e., $(D)/[(D)+(E)]\times 100\%$ is preferably 2 to 98%, more preferably 4 to 96%.

When component (E) has a chain length in the specific range and is combined with component (D), a cured product obtained by curing the inventive composition exhibits excellent oil bleeding and heat resistance. Since the desired effect is exerted without adding metal oxides and similar additives, the cured product is given low hardness.

[(F) Benzotriazole derivative]

Component (F) is a benzotriazole derivative having the general formula (3):

[Chem. 9]

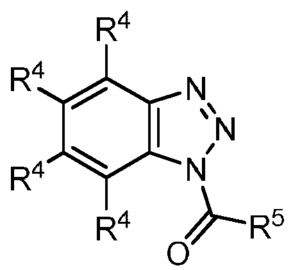

(3)

wherein $R^4$ is hydrogen or a $C_1$-$C_6$ monovalent hydrocarbon group and $R^5$ is a $C_1$-$C_{15}$ monovalent hydrocarbon group or a group having the formula (4):

[Chem. 10]

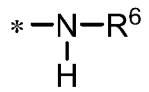

(4)

wherein $R^6$ is $-(CH_2)_L-Si(OR^7)_3$, $R^7$ is a $C_1$-$C_4$ alkyl group or group $SiR^8{}_3$, $R^8$ is a $C_1$-$C_4$ alkyl group, L is an integer of 1 to 6, and * designates a point of attachment.

The benzotriazole derivative functions to reduce the compression set of a silicone rubber as cured and ensures a sufficient pot life to work. The benzotriazole derivative also interacts with the platinum group metal based catalyst as component (C) so as to improve heat resistance, particularly when the catalyst is added in a large amount. The benzotriazole derivative as component (F) may be used alone or in admixture.

$R^4$ is hydrogen or a $C_1$-$C_6$ monovalent hydrocarbon group, examples of which include alkyl groups such as methyl, ethyl, propyl, isopropyl, butyl, isobutyl, tert-butyl, pentyl, neopentyl, hexyl, and cyclohexyl and substituted forms of the foregoing groups in which some or all hydrogen atoms are substituted by halogen atoms (e.g., fluorine, bromine and chlorine), cyano or the like, such as chloromethyl, chloropropyl, bromoethyl, trifluoropropyl, and cyanoethyl. Of these, hydrogen or methyl is preferred from the aspect of synthesis.

$R^5$ is a $C_1$-$C_{15}$ monovalent hydrocarbon group or a group having formula (4). Illustrative examples of the benzotriazole derivative are shown below.

[Chem. 11]

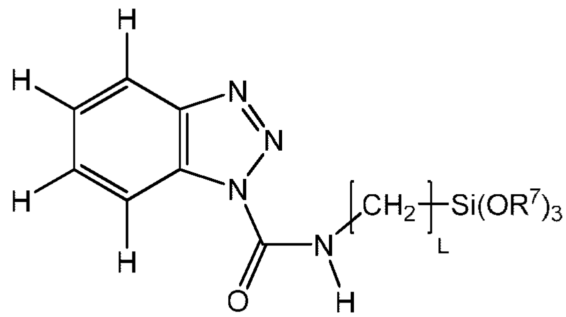

Herein L is an integer of 1 to 6, and $R^7$ is an alkyl group or trialkylsilyl group.

Of these, the compounds having the following formulae are most preferred.

[Chem. 12]

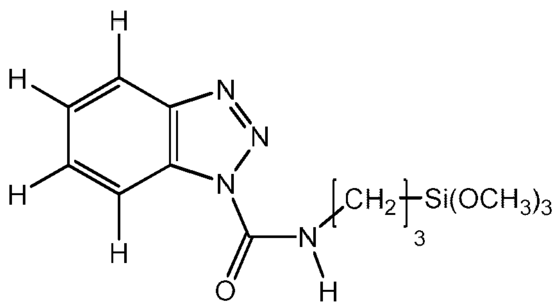

[Chem. 13]

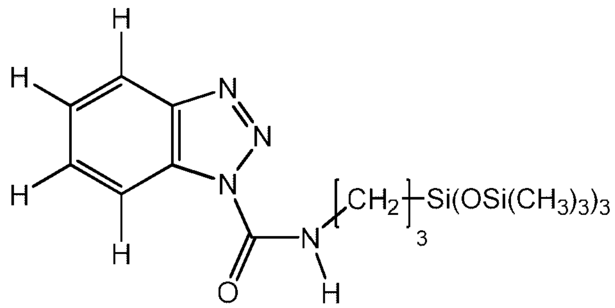

The amount of component (F) blended is 2 to 100 moles, preferably 5 to 75 moles, more preferably 10 to 50 moles per mole of platinum group metal atom in component (C). Less than 2 moles of component (F) fails to reduce the compression set sufficiently and to provide a sufficient pot life for working whereas more than 100 moles of component (F) may interfere with cure.

(Other components)

[(G) Reinforcing silica powder]

Preferably the silicone rubber composition further contains a reinforcing silica powder, more preferably reinforcing silica fine powder as component (G). The reinforcing silica powder (G) may be used alone or in admixture. The reinforcing silica powder (G) is not particularly limited with respect to the type of silica and may be selected from those commonly used as reinforcement for silicone rubber, for example, fumed silica (or dry silica), fired silica, and precipitated silica (or wet silica). Inter alia, fumed silica is preferred for effective enhancement of silicone rubber strength. Although any reinforcing silica powder used in conventional silicone rubber compositions is useful, the reinforcing silica powder should preferably have a specific surface area of at least 50 $m^2/g$ as measured by the BET method. It is advantageous to use reinforcing silica powder having a BET specific surface area of 50 to 400 $m^2/g$, specifically 100 to 350 $m^2/g$. The reinforcing silica powder may be surface treated with surface treating agents, specifically organosilicon compounds, typically hydrolyzable organosilicon compounds such as chlorosilanes, alkoxysilanes and organosilazanes for rendering the surface hydrophobic. In this case, the silica fine powder may be previously surface treated to be hydrophobic directly in the powder state with a surface treating agent. Alternatively, the silica powder may be surface treated to be hydrophobic by adding a surface treating agent during the step of mixing the silica powder with silicone oil (e.g., alkenyl-containing organopolysiloxane as component (A)).

For the surface treatment, any well-known techniques may be used. For example, an untreated silica fine powder and a surface treating agent are admitted into a mechanical milling device closed under atmospheric pressure or a fluidized bed where they are mixed to effect surface treatment at room temperature or elevated temperature, optionally in the presence of an inert gas. If desired, a catalyst (e.g., hydrolysis accelerant) is used to promote the surface treatment. The mixing step is followed by drying, yielding a treated silica fine powder. The amount of the surface treating agent used may be at least the amount calculated from the surface area of powder to be covered with the agent.

Suitable surface treating agents include silazanes such as hexamethyldisilazane; silane coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane and chloropropyltrimethoxysilane; and organosilicon compounds such as polymethylsiloxane and organohydrogenpolysiloxanes. After the surface treatment with such agents, the resulting silica fine particles are hydrophobic and ready for use. Of these treating agents, the silane coupling agents and silazanes are preferred.

When added, the amount of component (G) blended is preferably 5 to 100 parts, more preferably 5 to 80 parts, and even more preferably 5 to 60 parts by weight per 100 parts by weight of component (A). Less than 5 parts by weight of component (G) may fail to exert a reinforcement effect whereas a silicone rubber composition with more than 100 parts by weight of component (G) is too viscous to work or process.

The oil-bleeding silicone rubber composition may contain other components, if necessary. Included are reaction inhibitors such as ethynylcyclohexanol; fillers such as quartz powder, diatomaceous earth, and calcium carbonate; conductive agents such as carbon black, conductive zinc oxide, and metal powder; adhesion promoters, specifically organosilicon compounds, more specifically alkoxysilane compounds containing at least one functional group selected

from alkenyl, epoxy, amino, (meth)acryloxy and mercapto in the molecule, but not containing SiH groups in the molecule, thixotropic agents, colorants such as pigments, and benzotriazole derivatives.

Since the invention is successful in improving heat resistance without blending heat resistance improvers, specifically metal oxides such as iron oxide, titanium oxide and cerium oxide in the oil-bleeding silicone rubber composition, the amount of heat resistance improver blended can be reduced to 20% by weight or less, preferably the heat resistance improver is omitted.

The oil-bleeding silicone rubber composition may be prepared by appropriately mixing the essential components (A) to (F) and other optional components. The order of blending is not particularly limited. Preferably, to component (A), components (B), (D), (E), and (F) are first blended together or separately. As used herein, blending together means that three components are simultaneously blended, and blending separately means that components (B), (D), (E), and (F) are sequentially blended in a random order. Finally, component (C) is added and mixed. A cured product of the resulting composition exhibits excellent oil-bleeding and heat resistance during service.

Since the oil-bleeding silicone rubber composition thus obtained does not require to blend additives such as metal oxides, it looks colorless transparent to milky white and can be colored as desired with colorants such as pigments. The term "colorless to milky white" means the change in white turbidity that a product initially looks colorless transparent, gradually loses transparency, turns whitish (colorless semi-transparent), and finally turns milky white (no transparency).

The oil-bleeding silicone rubber composition may be molded and cured in accordance with standard methods. An appropriate molding method may be selected from injection molding, transfer molding, cast molding, and compression molding depending on the intended application. For curing, heat treatment (or primary vulcanization) may be carried out at 40 to 230°C for about 3 seconds to about 160 minutes. Optionally, the cured composition may be post-cured (or secondary vulcanization) at 40 to 230°C for about 10 minutes to about 24 hours.

The cured product of the oil-bleeding silicone rubber composition (silicone rubber cured product) has a hardness of preferably at least 10, more preferably 10 to 70, even more preferably 20 to 60 as measured by a hardness meter, Durometer type A according to JIS K 6249: 2003. Preferably, the hardness of silicone rubber cured product remains substantially unchanged even after it is heated in air atmosphere at 225°C for 72 hours. For example, a percent change of the Durometer type A hardness after heating in air atmosphere at 225°C for 72 hours from the initial Durometer type A hardness is preferably within ±7 units, more preferably within ±5 units.

The silicone rubber cured product has oil-bleeding properties. The term oil-bleeding means that silicone oil in the silicone rubber cured product seeps or bleeds out on its surface with a lapse of time, and is sometimes simply referred to as bleed.

The silicone rubber cured product has improved heat resistance. Provided that elongation at break is measured according to JIS K 6249: 2003, a percent reduction of the elongation at break after heating in air atmosphere at 225°C for 72 hours from the initial elongation at break is preferably 30% or less, more preferably 25% or less.

The percent reduction means a decline of the elongation at break of the silicone rubber cured product after heating relative to the initial elongation at break and is calculated according to the following equation.

$$\text{percent reduction} = [(\text{initial elongation at break})-(\text{elongation at break after } 225°\text{C}/72 \text{ hr heating})] / (\text{initial elongation at break}) \times 100\%$$

The cured product of the oil-bleeding silicone rubber composition (silicone rubber cured product) preferably has a compression set of up to 40%, more preferably up to 35%, even more preferably up to 30% after compressed at compression 25% and 150°C for 70 hours according to JIS K 6262: 2013. A compression set of up to 40% ensures that the composition is preferable as the material for O-rings and gaskets. The compression set is calculated according to the following equation.

$$\text{compression set} = [(\text{initial thickness of specimen})-(\text{thickness of specimen after } 150°\text{C}/70 \text{ hr heating})] / (\text{initial thickness of specimen}) \times 100\%$$

[Method for improving heat resistance and reducing compression set of oil-bleeding silicone rubber cured product]

The method for improving heat resistance and reducing compression set of oil-bleeding silicone rubber cured product according to the invention is a method for improving the heat resistance and reducing the compression set of an oil-bleeding silicone rubber cured product which is obtained by the steps of:

providing a silicone rubber composition comprising components (A) to (C):

(A) 100 parts by weight of an organopolysiloxane containing at least two silicon-bonded alkenyl groups per molecule,
(B) 0.2 to 20 parts by weight of an organohydrogenpolysiloxane containing at least two silicon-bonded hydrogen atoms per molecule, and
(C) a platinum group metal based catalyst in an amount to give 0.5 to 500 ppm by weight of platinum group metal based on the total weight of components (A) and (B),

blending components (D) to (F) in the silicone rubber composition:

(D) 1 to 10 parts by weight of a phenyl-containing organopolysiloxane having the formula (1):

[Chem. 14]

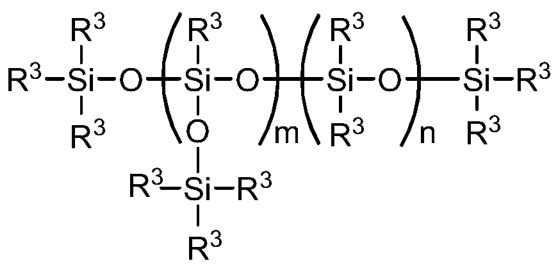

(1)

wherein $R^3$ which may be the same or different is a $C_1$-$C_{10}$ substituted or unsubstituted monovalent hydrocarbon group free of aliphatic unsaturation, at least one $R^3$ being phenyl, m is a positive number of 0 to 3, n is a positive number of 3 to 50, and m+n is a positive number of 3 to 50,
(E) 1 to 25 parts by weight of a nonfunctional dimethylpolysiloxane having the formula (2):

[Chem. 15]

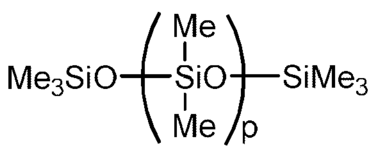

(2)

wherein Me stands for methyl and p is an integer of 2 to 600, and
(F) a benzotriazole derivative having the general formula (3):

[Chem. 16]

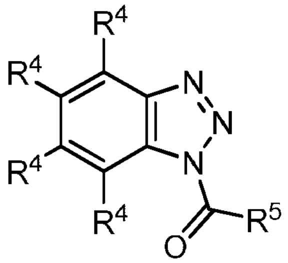

( 3 )

wherein $R^4$ is hydrogen or a $C_1$-$C_6$ monovalent hydrocarbon group, and $R^5$ is a $C_1$-$C_{15}$ monovalent hydrocarbon group or a group having the formula (4):

[Chem. 17]

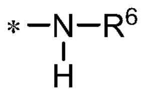

( 4 )

wherein $R^6$ is $-(CH_2)_L-Si(OR^7)_3$, $R^7$ is a $C_1$-$C_4$ alkyl group or group $SiR^8{}_3$, $R^8$ is a $C_1$-$C_4$ alkyl group, L is an integer of 1 to 6, and * designates a point of attachment, in an amount of 2 to 100 moles per mole of the platinum group metal in component (C), and

curing the silicone rubber composition into the oil-bleeding silicone rubber cured product.

Also preferably, the silicone rubber composition further contains (G) 5 to 100 parts by weight per 100 parts by weight of component (A) of a reinforcing silica powder. Components (A) to (G) in this embodiment are the same as the corresponding components in the oil-bleeding silicone rubber composition of the invention. The effects of improving heat resistance (elongation at break) and reducing compression set are confirmed by the same procedures as above.

## EXAMPLES

Examples and Comparative Examples of the invention are given below by way of illustration and not by way of limitation.

In Examples, all parts are by weight. Room temperature is 25°C. In the structural formulae, Me stands for methyl and Ph for phenyl. The phenyl content of component (D) is a proportion (mol%) of the moles of phenyl group relative to the total moles of $R^3$ in formula (1).

In Examples, the viscosity is as measured at 25°C by a rotational viscometer.

[Preparation Example 1]

On a kneader, 60 parts of molecular both end vinyldimethylsiloxy-blocked dimethylpolysiloxane (A1) (vinyl content $3.6\times10^{-5}$ mol/g) having a viscosity of ~30,000 mPa·s and an average degree of polymerization Mn of 750, 40 parts of finely divided silica (G) having a specific surface area of ~300 $m^2/g$ as measured by the BET method (trade name: Aerosil 300, Nippon Aerosil Co.), 8 parts of hexamethyldisiloxane as surface treating agent, and 2 parts of water were mixed for 1 hour. The kneader was then heated at an internal temperature of 150°C, at which mixing was continued for 2 hours. Then the temperature was lowered to 100°C, after which 30 parts of the dimethylpolysiloxane (A1) was further added and mixed until uniform. The mixture is designated Base Compound (I).

[Example 1]

To 100 parts of Base Compound (I), the following components were added: 6.54 parts of the dimethylpolysiloxane (A1), 1.54 parts of dimethyl-methylvinylpolysiloxane copolymer (A2) (vinyl content $6.5\times10^{-4}$ mol/g) blocked with trimethylsiloxy groups at both ends of the molecular chain and containing 5 mol% of vinyl based on silicon-bonded monovalent groups or atoms on side chains (i.e., diorganosiloxane units constituting the backbone), 1.15 parts of methylhydrogenpolysiloxane (B1) blocked with trimethylsiloxy groups at both ends of the molecular chain and having SiH groups on side chains (i.e., molecular both end trimethylsiloxy-blocked dimethylsiloxane/methylhydrogensiloxane copolymer having a degree of polymerization of 38 and a SiH content of 0.00694 mol/g) as a crosslinker, 3.85 parts of phenyl-containing organopolysiloxane (D1) having a phenyl content of 19 mol%, represented by formula (1-1):

[Chem. 18]

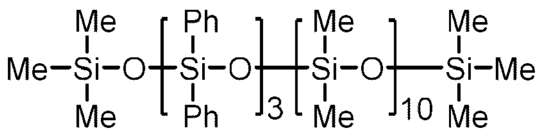

( 1-1 )

(phenyl group 19 mol%)
wherein 16.15 parts of nonfunctional dimethylpolysiloxane (E1) having an average degree of polymerization Mn of 216 and having trimethylsiloxy groups at both ends of the molecular chain, and 0.08 part (to give acetylene/Pt atom = 38 mol/mol) of ethynylcyclohexanol as a reaction inhibitor. Further 0.03 part (to give benzotriazole derivative/Pt atom = 24 mol/mol) of a benzotriazole derivative having the formula (3-1):

[Chem. 19]

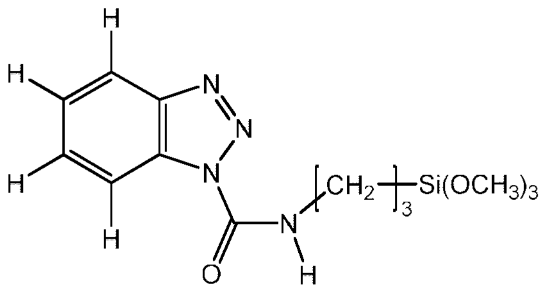

(3-1)

was added, followed by 15 minutes of stirring.

Next, 0.08 part of a toluene solution of platinum-1,3-divinyl-1,1,3,3-tetramethyldisiloxane complex (C1) having a Pt concentration of 1 wt% was added to the mixture, which was stirred for 30 minutes, yielding a uniform silicone rubber composition A. The resulting composition A had an outer appearance which was colorless semi-transparent on visual observation.

Composition A was molded 2 mm thick and press cured at 150°C for 10 minutes to form a specimen of silicone rubber cured product, on which the following tests were carried out.

(Oil-bleeding)

The cured product was cut to a sheet sample of 15 mm by 35 mm. After this sample was held at room temperature (25°C) for one day, it was examined by finger touch whether or not oil seeped on the surface.

(Durometer Type A hardness, elongation at break, and compression set)

A test sheet was prepared from the cured product according to JIS K 6249: 2003. On this test sheet, initial values of Durometer Type A hardness and elongation at break (%) were measured. The test sheet was held in a dryer at 225°C for 72 hours (3 days), after which Durometer A hardness and elongation at break (%) were similarly measured. From the measured values, a percent change of Durometer A hardness and a precent reduction of elongation at break (%) were determined according to the following equations.

percent change of Durometer A hardness =

[(Durometer A hardness after 225°C/72 hr heating) - (initial Durometer A hardness)] / (initial Durometer A hardness) × 100%

precent reduction of elongation at break =

[(initial elongation at break) - (elongation at break after 225°C/72 hr heating)] / (initial elongation at break) × 100%

A specimen for compression set test (diameter 29.0 mm by thickness 12.5 mm) was prepared from the cured product according to JIS K 6262: 2013. The initial thickness of the specimen was measured. The specimen was compressed 25% and held in a dryer at 150°C for 70 hours, after which the thickness of the specimen was similarly measured. From the measured values, a compression set was determined according to the following equation.

compression set =

[(initial thickness of specimen) - (thickness of specimen after 150°C/70 hr heating)] / (initial thickness of specimen) × 100%

[Example 2]

To 100 parts of Base Compound (I) prepared above, the following components were added: 18.85 parts of the dimethylpolysiloxane (A1), 0.98 part of methylhydrogenpolysiloxane (B1) blocked with trimethylsiloxy groups at both ends of the molecular chain and having SiH groups on side chains (i.e., molecular both end trimethylsiloxy-blocked dimethylsiloxane/methylhydrogensiloxane copolymer having a degree of polymerization of 38 and a SiH content of 0.00694 mol/g) as a crosslinker, 3.85 parts of silicone oil (D1) having a phenyl content of 19 mol%, represented by formula (1-1), 1.54 parts of nonfunctional dimethylpolysiloxane (E2) having an average degree of polymerization Mn of 517 and having trimethylsiloxy groups at both ends of the molecular chain, and 0.08 part (to give acetylene/Pt atom = 38 mol/mol) of ethynylcyclohexanol as a reaction inhibitor. Further 0.03 part (to give benzotriazole derivative/Pt atom = 24 mol/mol) of benzotriazole derivative (F1) was added, followed by 15 minutes of stirring.

Next, 0.08 part of a toluene solution of platinum-1,3-divinyl-1,1,3,3-tetramethyldisiloxane complex (C1) having a Pt concentration of 1 wt% was added to the mixture, which was stirred for 30 minutes, yielding a uniform silicone rubber composition B. The resulting composition B had an outer appearance which was colorless semi-transparent on visual observation.

Composition B was evaluated for oil bleeding, Durometer A hardness, elongation at break, and compression set as in Example 1.

[Example 3]

To 100 parts of Base Compound (I), the following components were added: 6.54 parts of the dimethylpolysiloxane (A1), 1.54 parts of dimethyl-polysiloxane (A2) (vinyl content $6.5\times10^{-4}$ mol/g) blocked with trimethylsiloxy groups at both ends of the molecular chain, containing 5 mol% of vinyl based on silicon-bonded monovalent groups or atoms on side chains (i.e., diorganosiloxane units constituting the backbone) and having an average degree of polymerization Mn of 200, 1.15 parts of methylhydrogenpolysiloxane (B1) blocked with trimethylsiloxy groups at both ends of the molecular chain and having SiH groups on side chains (i.e., molecular both end trimethylsiloxy-blocked dimethylsiloxane/methylhydrogensiloxane copolymer having a degree of polymerization of 38 and a SiH content of 0.00694 mol/g) as a crosslinker, 3.85 parts of phenyl-containing organopolysiloxane (D2) having a phenyl content of 35 mol%, represented by formula (1-2):

[Chem. 20]

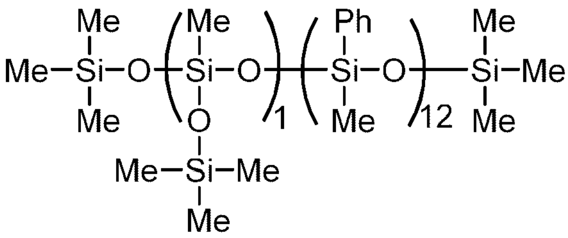
( 1-2 )

(phenyl group 35 mol%)
wherein 16.15 parts of nonfunctional dimethylpolysiloxane (E1) having an average degree of polymerization Mn of 216 and having trimethylsiloxy groups at both ends of the molecular chain, and 0.08 part (to give acetylene/Pt atom = 38 mol/mol) of ethynylcyclohexanol as a reaction inhibitor. Further 0.03 part (to give benzotriazole derivative/Pt atom = 24 mol/mol) of benzotriazole derivative (F1) was added, followed by 15 minutes of stirring.

Next, 0.08 part of a toluene solution of platinum-1,3-divinyl-1,1,3,3-tetramethyldisiloxane complex (C1) having a Pt concentration of 1 wt% was added to the mixture, which was stirred for 30 minutes, yielding a uniform silicone rubber composition C. The resulting composition C had an outer appearance which was colorless semi-transparent on visual observation.

Composition C was evaluated for oil bleeding, Durometer A hardness, elongation at break, and compression set as in Example 1.

[Comparative Example 1]

To 100 parts of Base Compound (I), the following components were added: 18.8 parts of the dimethylpolysiloxane (A1), 1.06 parts of methylhydrogenpolysiloxane (B1) blocked with trimethylsiloxy groups at both ends of the molecular chain and having SiH groups on side chains (i.e., molecular both end trimethylsiloxy-blocked dimethylsiloxane/methylhydrogensiloxane copolymer having a degree of polymerization of 38 and a SiH content of 0.00694 mol/g) as a crosslinker, 5.38 parts of phenyl-containing organopolysiloxane (D1) having a phenyl content of 19 mol%, represented by the above formula (1-1), and 0.08 part (to give acetylene/Pt atom = 38 mol/mol) of ethynylcyclohexanol as a reaction inhibitor. Further 0.03 part (to give benzotriazole derivative/Pt atom = 24 mol/mol) of benzotriazole derivative (F1) was added, followed by 15 minutes of stirring.

Next, 0.08 part of a toluene solution of platinum-1,3-divinyl-1,1,3,3-tetramethyldisiloxane complex (C1) having a Pt concentration of 1 wt% was added to the mixture, which was stirred for 30 minutes, yielding a uniform silicone rubber composition D. The resulting composition D had an outer appearance which was colorless semi-transparent on visual observation.

Composition D was evaluated for oil bleeding, Durometer A hardness, elongation at break, and compression set as in Example 1.

[Comparative Example 2]

To 100 parts of Base Compound (I), the following components were added: 22.9 parts of the dimethylpolysiloxane (A1), 1.02 parts of methylhydrogenpolysiloxane (B1) blocked with trimethylsiloxy groups at both ends of the molecular chain and having SiH groups on side chains (i.e., molecular both end trimethylsiloxy-blocked dimethylsiloxane/methylhydrogensiloxane copolymer having a degree of polymerization of 38 and a SiH content of 0.00694 mol/g) as a crosslinker, 2.31 parts of nonfunctional dimethylpolysiloxane (E1) having an average degree of polymerization Mn of 216 and having trimethylsiloxy groups at both ends of the molecular chain, and 0.08 part (to give acetylene/Pt atom = 38 mol/mol) of ethynylcyclohexanol as a reaction inhibitor. Further 0.03 part (to give benzotriazole derivative/Pt atom = 24 mol/mol) of benzotriazole derivative (F1) was added, followed by 15 minutes of stirring.

Next, 0.08 part of a toluene solution of platinum-1,3-divinyl-1,1,3,3-tetramethyldisiloxane complex (C1) having a Pt concentration of 1 wt% was added to the mixture, which was stirred for 30 minutes, yielding a uniform silicone rubber composition E. The resulting composition E had an outer appearance which was colorless transparent on visual observation.

Composition E was evaluated for oil bleeding, Durometer A hardness, elongation at break, and compression set as in Example 1.

[Comparative Example 3]

To 100 parts of Base Compound (I), the following components were added: 18.8 parts of the dimethylpolysiloxane (A1), 1.06 parts of methylhydrogenpolysiloxane (B1) blocked with trimethylsiloxy groups at both ends of the molecular chain and having SiH groups on side chains (i.e., molecular both end trimethylsiloxy-blocked dimethylsiloxane/methylhydrogensiloxane copolymer having a degree of polymerization of 38 and a SiH content of 0.00694 mol/g) as a crosslinker, 5.38 parts of phenyl-containing organopolysiloxane (D1) having a phenyl content of 19 mol%, represented by the above formula (1-1), 1.63 parts of iron oxide (diiron trioxide) as a heat resistance improver, and 0.08 part (to give acetylene/Pt atom = 38 mol/mol) of ethynylcyclohexanol as a reaction inhibitor. Further 0.03 part (to give benzotriazole derivative/Pt atom = 24 mol/mol) of benzotriazole derivative (F1) was added, followed by 15 minutes of stirring.

Next, 0.08 part of a toluene solution of platinum-1,3-divinyl-1,1,3,3-tetramethyldisiloxane complex (C1) having a Pt concentration of 1 wt% was added to the mixture, which was stirred for 30 minutes, yielding a uniform silicone rubber composition F. The resulting composition F had an outer appearance which was reddish brown on visual observation.

Composition F was evaluated for oil bleeding, Durometer A hardness, elongation at break, and compression set as in Example 1.

[Comparative Example 4]

To 100 parts of Base Compound (I), the following components were added: 6.54 parts of the dimethylpolysiloxane (A1), 1.54 parts of dimethyl-methylvinylpolysiloxane copolymer (A2) (vinyl content $6.5\times10^{-4}$ mol/g) blocked with trimethylsiloxy groups at both ends of the molecular chain, containing 5 mol% of vinyl based on silicon-bonded monovalent groups or atoms on side chains (i.e., diorganosiloxane units constituting the backbone) and having an average degree of polymerization Mn of 200, 1.15 parts of methylhydrogenpolysiloxane (B1) blocked with trimethylsiloxy groups at both ends of the molecular chain and having SiH groups on side chains (i.e., molecular both end trimethylsiloxy-blocked dimethylsiloxane/methylhydrogensiloxane copolymer having a degree of polymerization of 38 and a SiH content of 0.00694 mol/g) as a crosslinker, 3.85 parts of phenyl-containing organopolysiloxane (D1) having a phenyl content of 19 mol%, 16.15 parts of nonfunctional dimethylpolysiloxane (E1) having an average degree of polymerization Mn of 216 and having trimethylsiloxy groups at both ends of the molecular chain, and 0.08 part (to give acetylene/Pt atom = 38 mol/mol) of ethynylcyclohexanol as a reaction inhibitor. This was followed by 15 minutes of stirring.

Next, 0.08 part of a toluene solution of platinum-1,3-divinyl-1,1,3,3-tetramethyldisiloxane complex (C1) having a Pt concentration of 1 wt% was added to the mixture, which was stirred for 30 minutes, yielding a uniform silicone rubber composition G. The resulting composition G had an outer appearance which was colorless semi-transparent on visual observation.

Composition G was evaluated for oil bleeding, Durometer A hardness, elongation at break, and compression set as in Example 1. The results are shown in Table 1.

[Table 1]

| | | | Example 1 | Example 2 | Example 3 | Comp. Example 1 | Comp. Example 2 | Comp. Example 3 | Comp. Example 4 |
|---|---|---|---|---|---|---|---|---|---|
| Silicone rubber composition (pbw) | (A) | (A1) | 75.77 | 88.08 | 75.77 | 88.03 | 92.13 | 88.03 | 75.77 |
| | | (A2) | 1.54 | - | 1.54 | - | - | - | 1.54 |
| | (B) | (B1) | 1.15 | 0.98 | 1.15 | 1.06 | 1.02 | 1.06 | 1.15 |
| | (C) | (C1) Pt | 0.08 | 0.08 | 0.08 | 0.08 | 0.08 | 0.08 | 0.08 |
| | (D) | (D1) formula (1-1) | 3.85 | 3.85 | - | 5.38 | - | 5.38 | 3.85 |
| | | (D2) formula (1-2) | - | - | 3.85 | - | - | - | - |
| | (E) | (E1) Mn=216 | 16.15 | - | 16.15 | - | 2.31 | - | 16.15 |
| | | (E2) Mn=517 | - | 1.54 | - | - | - | - | - |
| | (F) | benzotriazole derivative | 0.03 | 0.03 | 0.03 | 0.03 | 0.03 | 0.03 | - |
| | (G) | surface hydrophobized finely divided silica | 30.77 | 30.77 | 30.77 | 30.77 | 30.77 | 30.77 | 30.77 |
| | Heat resistance improver | iron oxide | - | - | - | - | - | 1.63 | - |
| | Reaction inhibitor | ethynylcyclohexanol | 0.08 | 0.08 | 0.08 | 0.08 | 0.08 | 0.08 | 0.08 |
| Test results | Composition | Outer appearance | colorless semi-transparent | colorless semi-transparent | colorless semi-transparent | colorless semi-transparent | colorless transparent | reddish brown | colorless semi-transparent |
| | Cured product | Compression set (%) | 25 | 28 | 26 | 28 | 28 | 25 | 45 |
| | | Oil bleeding | yes | yes | yes | yes | no | yes | yes |
| | Hardness (Durometer A) | Initial | 20 | 27 | 20 | 23 | 28 | 25 | 20 |
| | | After heating | 21 | 27 | 21 | 23 | 29 | 24 | 21 |
| | | Change (%) | 5 | 0 | 5 | 0 | 4 | -4 | 5 |
| | Elongation at break | Initial (%) | 780 | 850 | 790 | 800 | 830 | 750 | 780 |
| | | After heating (%) | 570 | 600 | 600 | 440 | 480 | 520 | 560 |
| | | Reduction (%) | 27 | 29 | 24 | 45 | 42 | 31 | 27 |

While the invention has been illustrated and described in typical embodiments, it is not intended to be limited to these embodiments. Various other embodiments, additions, modifications and deletions may occur to persons skilled in the art. All such embodiments fall within the spirit and scope of the invention as long as the effects and benefits of the

invention are achieved.

**Claims**

1. An oil-bleeding silicone rubber composition comprising

(A) 100 parts by weight of an organopolysiloxane containing at least two silicon-bonded alkenyl groups per molecule,
(B) 0.2 to 20 parts by weight of an organohydrogenpolysiloxane containing at least two silicon-bonded hydrogen atoms per molecule,
(C) a platinum group metal based catalyst in an amount to give 0.5 to 500 ppm by weight of platinum group metal based on the total weight of components (A) and (B),
(D) 1 to 10 parts by weight of a phenyl-containing organopolysiloxane having the formula (1):

[Chem. 1]

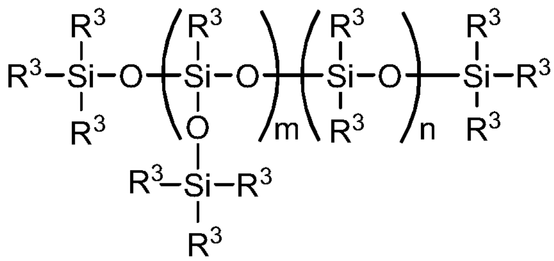

(1)

wherein $R^3$ which may be the same or different is a $C_1$-$C_{10}$ substituted or unsubstituted monovalent hydrocarbon group free of aliphatic unsaturation, at least one $R^3$ is phenyl, m is a positive number of 0 to 3, n is a positive number of 3 to 50, and m+n is a positive number of 3 to 50,
(E) 1 to 25 parts by weight of a nonfunctional dimethylpolysiloxane having the formula (2):

[Chem. 2]

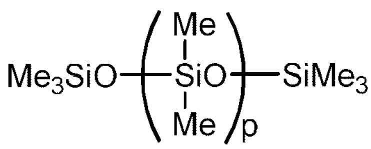

(2)

wherein Me stands for methyl and p is an integer of 2 to 600, and
(F) a benzotriazole derivative having the general formula (3):

[Chem. 3]

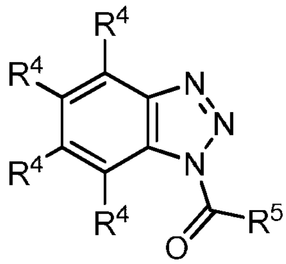

(3)

wherein $R^4$ is hydrogen or a $C_1$-$C_6$ monovalent hydrocarbon group, and $R^5$ is a $C_1$-$C_{15}$ monovalent hydrocarbon group or a group having the formula (4):

[Chem. 4]

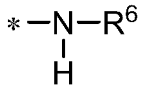

( 4 )

wherein $R^6$ is $-(CH_2)_L-Si(OR^7)_3$, $R^7$ is a $C_1$-$C_4$ alkyl group or group $SiR^8_3$, $R^8$ is a $C_1$-$C_4$ alkyl group, L is an integer of 1 to 6, and * designates a point of attachment, in an amount of 2 to 100 moles per mole of the platinum group metal in component (C).

**2.** The oil-bleeding silicone rubber composition of claim 1, further comprising (G) 5 to 100 parts by weight per 100 parts by weight of component (A) of a reinforcing silica powder.

**3.** The oil-bleeding silicone rubber composition of claim 1 or 2 wherein a cured silicone rubber obtained by curing the silicone rubber composition has a compression set of up to 40% after compressed at compression 25% and 150°C for 70 hours according to JIS K 6262: 2013.

**4.** The oil-bleeding silicone rubber composition of any one of claims 1 to 3 wherein a cured silicone rubber obtained by curing the silicone rubber composition has an elongation at break as measured according to JIS K 6249: 2003, and a percent reduction of the elongation at break after heating at 225°C for 72 hours from the initial elongation at break is 30% or less.

**5.** The oil-bleeding silicone rubber composition of any one of claims 1 to 4 wherein in formula (1), m is a positive number of 1 to 3, n is a positive number of 3 to 49, and m+n is a positive number of 4 to 50.

**INTERNATIONAL SEARCH REPORT**

International application No. **PCT/JP2022/000939**

**A. CLASSIFICATION OF SUBJECT MATTER**

***C08K 5/3475***(2006.01)i; ***C08L 83/04***(2006.01)i; ***C08L 83/05***(2006.01)i; ***C08L 83/07***(2006.01)i; ***C08K 3/36***(2006.01)i
FI: C08L83/07; C08L83/04; C08L83/05; C08K5/3475; C08K3/36

According to International Patent Classification (IPC) or to both national classification and IPC

**B. FIELDS SEARCHED**

Minimum documentation searched (classification system followed by classification symbols)

C08K5/3475; C08L83/04; C08L83/05; C08L83/07; C08K3/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2004-75813 A (SHIN ETSU CHEM. CO., LTD.) 11 March 2004 (2004-03-11) claims, examples, paragraphs [0001], [0002], [0014]-[0016], [0027] | 1-5 |
| Y | WO 2016/199742 A1 (SHIN ETSU CHEM. CO., LTD.) 15 December 2016 (2016-12-15) claims, examples, paragraphs [0003], [0005] | 1-5 |
| Y | WO 2018/198830 A1 (SHIN ETSU CHEM. CO., LTD.) 01 November 2018 (2018-11-01) claims, examples, paragraphs [0009], [0049], [0074] | 1-5 |
| Y | JP 2011-153305 A (DOW CORNING TORAY CO., LTD.) 11 August 2011 (2011-08-11) claims, examples, paragraphs [0029], [0037], [0042], [0043] | 1-5 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **15 February 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2022/000939**

| Patent document cited in search report | Publication date (day/month/year) | Patent family member(s) | Publication date (day/month/year) |
|---|---|---|---|
| JP 2004-75813 A | 11 March 2004 | (Family: none) | |
| WO 2016/199742 A1 | 15 December 2016 | US 2018/0134871 A1<br>claims, examples, paragraphs [0003], [0006]<br>EP 3309219 A1<br>CN 107636078 A<br>KR 10-2018-0016392 A | |
| WO 2018/198830 A1 | 01 November 2018 | US 2021/0108079 A1<br>claims, examples, paragraphs [0011], [0063], [0093]<br>EP 3617273 A1<br>CN 110536933 A | |
| JP 2011-153305 A | 11 August 2011 | US 2013/0011606 A1<br>claims, examples, paragraphs [0064], [0075], [0085]-[0089]<br>EP 2519588 A1<br>CN 102666729 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016518461 A
- JP 2014031408 A
- JP H07130424 A
- JP H06032983 A
- JP 2000118361 A
- JP H06093186 A
- JP H02242854 A